# EUROPEAN PATENT SPECIFICATION

(11) **EP 1 574 930 B1**
(45) Date of publication and mention of the grant of the patent: **24.10.2018**
(21) Application number: 05003311.7
(22) Date of filing: 16.02.2005
(51) Int. Cl.: G06F 1/00, H04N 1/44, H04N 1/32, H04N 1/00

(54) **Multifunction apparatus**
Multifunktionsvorrichtung
Appareil multifonction

(30) Priority: 25.02.2004 JP 2004050160
(43) Date of publication of application: 14.09.2005
(60) Divisional application: 18194150.1
(73) Proprietor: Panasonic Corporation, Kadoma-shi Osaka 571-8501 (JP)
(72) Inventor: Nishizawa, Minoru, Fujisawa-shi, Kanagawa 252-0813 (JP); Takahashi, Etsuro, Ueda-shi, Nagano 386-0005 (JP)
(74) Representative: Grünecker Patent- und Rechtsanwälte PartG mbB

(56) References cited:
- US-A1- 2001 048 823
- US-A1- 2003 088 570
- JONATHAN TREVOR ET AL.: "Issues in Personalizing shared ubiquitous devices"[Online] vol. 2498, 2002, pages 56-72, XP002356517 Retrieved from the Internet: URL:http://zing.ncsl.nist.gov/ubicomp02/Ub iComp02_Workshop/papers/2002_Trevor_Person alization.pdf> [retrieved on 2005-11-29]

## Description

### BACKGROUND OF THE INVENTION

### 1. Field of the Invention

The present invention relates to a multifunction apparatus that includes a plurality of functions including a copier function.

### 2. Description of Related Art

A multifunction apparatus having a plurality of functions such as printer, copier, scanner, facsimile, and e-mail functions has become common. In order to limit the use of such a multifunction apparatus, a method has been introduced that restricts the use of non-registered users by performing user authentication from the input of the user ID and password (e.g., Related Art 1). In addition, another method has been introduced in which one of the multifunction apparatus functions (e.g., facsimile relay function that converts an e-mail into a facsimile image) is limited by checking the domain of the e-mail sender and denying the use of the facsimile relay function if accessed by a non-registered domain (e.g., Related Art 2).
[Related Art 1] Japanese Patent Laid Open Application 2003-233725
[Related Art 2] Japanese Translation of PCT International Application H09-536037

However, the above methods have the following shortcomings. The authentication method that checks the user ID and password input can only be used for determining whether the multifunction apparatus itself can be used. In other words, the method could not be used for limiting each user to use certain functions among all functions included in the multifunction apparatus. In addition, the method that limits facsimile relay function (during the transmission) using the sender's domain name automatically terminates the transmission when the domain is not registered. Therefore, an apparatus has been needed that allows setup for individual user indicating whether a certain function can be used.

Document US 2003/088570 A1 describes systems and methods for operating a multiuser document device via a device portal. The personal portal is personalized based on the identity of the user so that only the identified user has access to his/her personal resources. A user identification device may be used for identifying the user to the interface, such as a key entry associated with the user, or an ID of the user, such as an electronic tag that may be sensed or detected by the interface.

In document Jonathan Trevor et al.: "Issues in Personalizing ubiquitous devices" [online], vol. 2498, 2002, pages 56-72, XP002356517, the use of a non-contact smart card and RFID technology is employed for identifying a user at embedded interfaces and therefore eliminating the need of inserting manually usernames and passwords. The users may carry a small "tag", which can be detected when waved near special tag readers co-located with the shared devices.

### SUMMARY OF THE INVENTION

The present invention addresses the above-described problems. The purpose of the invention is to provide a multifunction apparatus that can set limits on the types of functions to be used for each user, the functions being included in the multifunction apparatus.

In the present invention, the multifunction apparatus having a plurality of functions (including a copier function) retrieves user identification information from a memory card carried by the user within a detection area, obtains limitation information of usable functions that is preset for the authenticated user based on the retrieved identification information, and controls the usable functions for the authenticated user according to the limitation information of usable functions.

### BRIEF DESCRIPTION OF THE DRAWINGS

The present invention is further described in the detailed description which follows, with reference to the noted plurality of drawings by way of non-limiting examples of exemplary embodiments of the present invention, in which like reference numerals represent similar parts throughout the several views of the drawings, and wherein:
Fig. 1 is a functional block diagram illustrating a multifunction apparatus according to an embodiment of the invention;
Fig. 2 illustrates registration information of a memory card that is readout/written-in by the multifunction apparatus according to the embodiment;
Fig. 3 is a data structure of a personal information table that is registered in a server (personal information server) connected to the multifunction apparatus according to the embodiment;
Fig. 4 illustrates an example of function limit information included in the personal information table that is registered in the server (personal information server) connected to the multifunction apparatus according to the embodiment;
Fig. 5 is a flowchart illustrating a process when a user specifies an operation on the multifunction apparatus according to the embodiment;
Fig. 6 is a flowchart illustrating a process when a user specifies an operation on the multifunction apparatus according to the embodiment;
Fig. 7 is a functional block diagram of the server connected to the multifunction apparatus according to the embodiment; and
Fig. 8 is a flowchart illustrating an operation of a personal authentication server connected to the multifunction apparatus according to the embodiment.

### DETAILED DESCRIPTION OF PREFERRED EMBODIMENTS

The embodiments of the present invention are explained in the following, in reference to the above-described drawings.

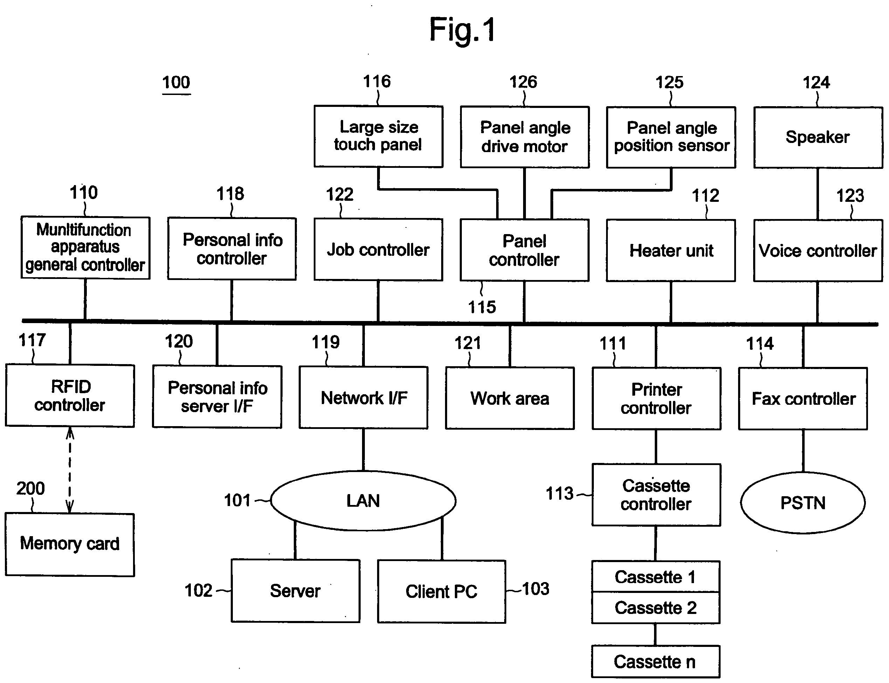

Fig. 1 is a functional block diagram of multifunction apparatus 100 according to an embodiment of the present invention. Fig. 1 also shows a portion of a network. Multifunction apparatus 100 can be connected to various servers 102 and client PCs 103, via LAN 101. Server 102 can be a personal information server that stores a personal information table and performs personal authentication and personal information distribution. Server 102 can also be a web server that executes a job selected from a menu in a remote procedure method. Although multifunction apparatus 100 includes printer, copier, scanner, facsimile, and e-mail functions, Fig.1 only shows blocks related to the printer and facsimile functions.

Multifunction apparatus general controller 110 controls the overall multifunction apparatus 100. Printer controller 111 executes a process that converts printout data (given from a client) into image data in a predetermined format. Printer controller 111 especially gives a warm up instruction to heater unit (fusing apparatus) 112 in an image generation unit (not shown in the figure), and gives a cassette selection instruction to cassette controller 113. Cassette controller 113 selects an indicated cassette from a plurality of vertically stacked cassettes (1) - (n), and feeds paper to the image generation unit. Fax controller 114 has a modem that is connected to a PSTN to execute steps for a facsimile communication. Panel controller 115 displays an operation screen and the like on large-size touch panel 116 and analyzes an operation input by the user from where the user touched on large-size touch panel 116 and from the displayed contents.

RFID controller 117 reads and writes data on memory card 200 using electromagnetic wave signals. When a magnetic field is applied to memory card 200 from RFID controller 117, the reflected electromagnetic wave includes effect (information) corresponding to the memory contents of memory card 200. RFID controller 117 detects the memory contents of memory card 200 using the reflected electromagnetic wave. Conversely, electromagnetic wave signals applied from RFID controller 117 to memory card 200 is used to write information because the signals have a magnetic influence on memory card 200. RFID controller 117 performs non-contact reading/writing of card registration data, via electromagnetic wave signals, from/into memory card in the detection area within about a 1-meter radius range.

Personal information controller 118 manages the write-in destination of the registration data, which is read from memory card 200. In addition, personal information controller 118 notifies RFID controller 117 of data to be written in memory card 200. Network I/F 119 is a section that interfaces with LAN 101. Personal information server I/F 120 executes a process for communicating with a personal information server among servers 102 on LAN 101. Work area 121 stores data received from memory card 200 and personal information server. Job controller 122 provides a command to an appropriate unit when a job is executed using a function such as copier, printer, facsimile, scanner, or e-mail functions.

Voice controller 123 stores voice data for a voice guidance. Upon receiving a voice guidance instruction (in synchronization with the user's operation) from panel controller 115 and job controller 122, voice controller 123 outputs the corresponding voice data to speaker 124. It is preferable that the voice guidance is voice data that assists the operation from the operation screen displayed on large-size touch panel 116. However, other forms of voice guidance can be output. Panel angle position sensor 125 detects an angle of large-size touch panel 116. Panel angle drive motor 126 receives a control signal from panel controller 115 and adjusts the angle of large-size touch panel 116. In this embodiment, the angel of large-size touch panel 116 can be adjusted. However, the touch panel angel can be at a fixed location.

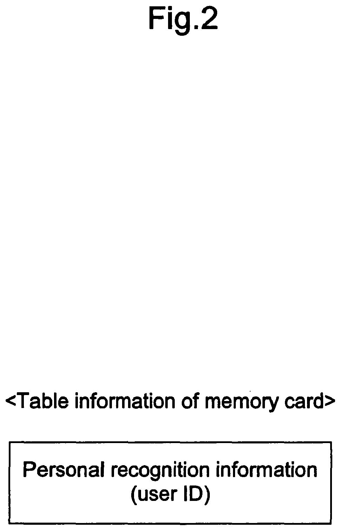

Fig. 2 illustrates the registration information of memory card 200.

As shown in the figure, memory card 200 stores only user ID as personal identification information. It is preferable to limit the registration information (of memory card 200) to user ID, and not to store other personal information, for security reasons. However, other personal information and/or group information can be stored.

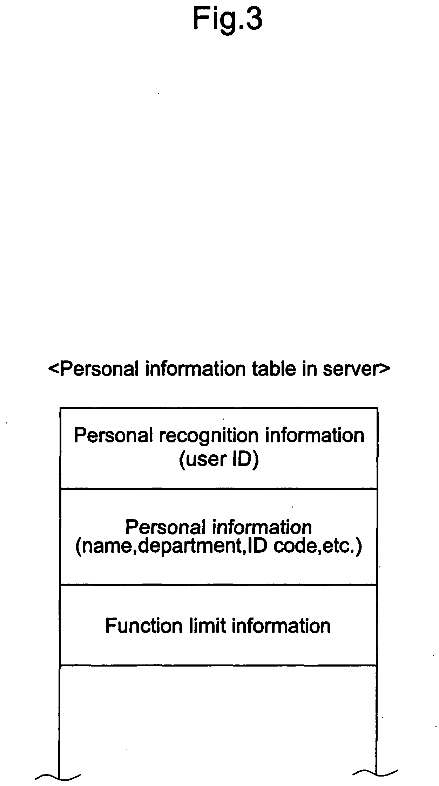

Fig. 3 illustrates a data structure of a personal information table that is registered in the personal information server (as server 102).

A personal information table is created for each registered user. As shown in Fig. 3, the personal information table includes a user ID (personal identification information), personal information such as a department name to which the user belongs, and function information that limits the use of the registered user (hereafter referred to as "function limit information").

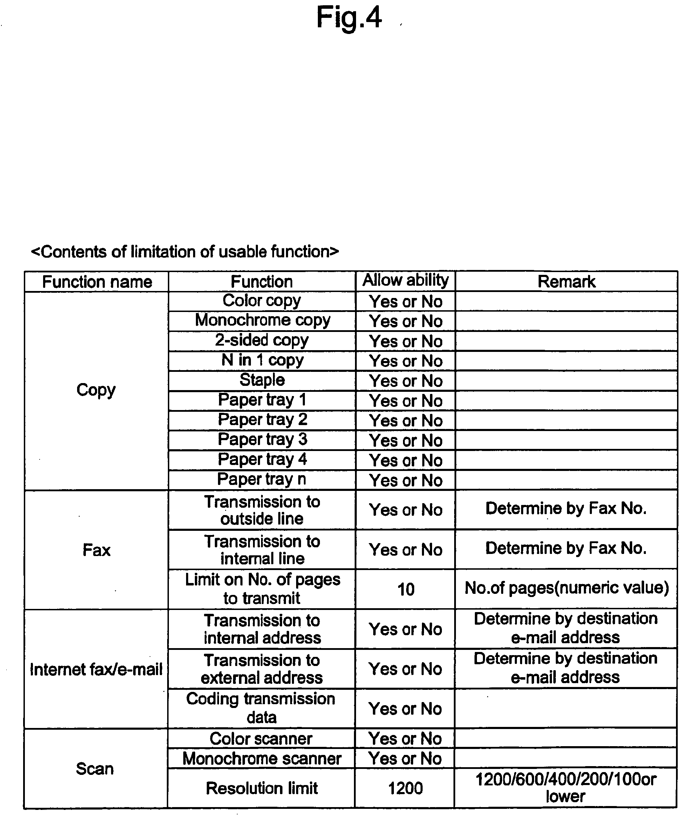

Fig. 4 illustrates an example of the function limit information within a personal information table.

As shown in Fig. 4, the function limit information includes a list of functions to which a user is/is not allowed to use, and information stating whether each function item of the list is allowed to the user ("allowability"). To be specific, the allowability and remark are registered corresponding to each item of the function list (function name and its function). In this embodiment, "copy", "fax", "Internet fax/e-mail", "scan" are registered as "function names". Each function name includes a plurality of functions that are registered. For example, function name "copy" includes registered functions such as "color copy", "monochrome copy", "paper tray", etc. When the use of a certain function is permitted, "yes" is set under "allowability" for the function. It is also possible to only allow a user to make a copy using recycled paper (e.g., using a back side of an already used sheet of paper) by setting a specific paper tray that carries such recycled paper. In addition, there are cases where a specific numeric value (e.g., number of sheet of paper) are set as "allowability" as shown in "limit on number of pages to transmit" in "fax" function name and "resolution limit" in "scan" function name. In "remark", criteria to be applied when determining the allowability can be registered, for example.

Accordingly, in multifunction apparatus 100 according to this embodiment, the function limit information includes a list of functions and the information stating whether each item of the function list is allowed. Therefore, it becomes easy to setup/check the allowability of each item of the function list. Especially, the function limit information includes a function list (limiting the use of the copy function and fax function) and allowability information (indicating whether each function use in the function list is allowed). Therefore, it is possible to easily setup/confirm the allowability for each function, in the function list that is related to copy and fax functions.

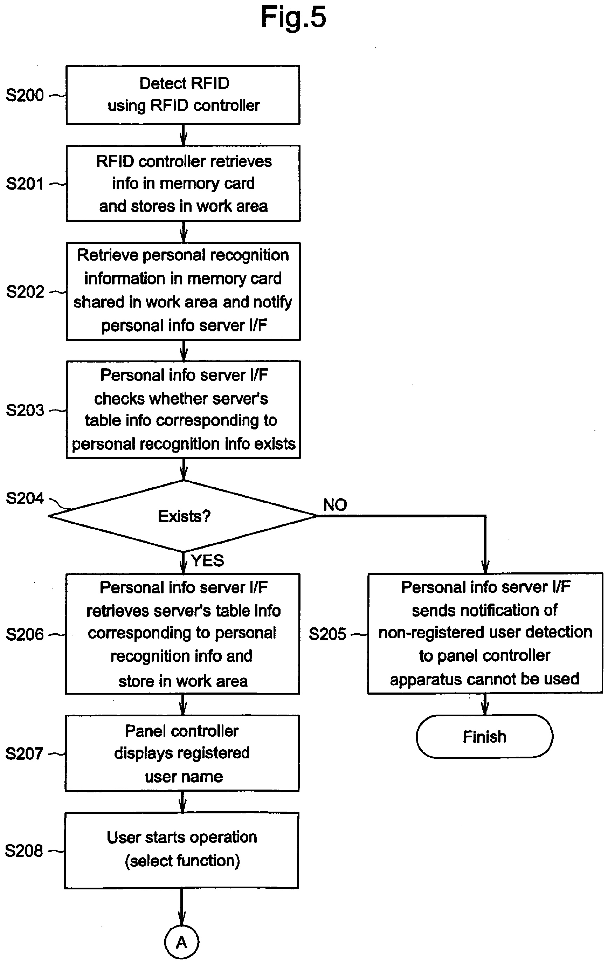

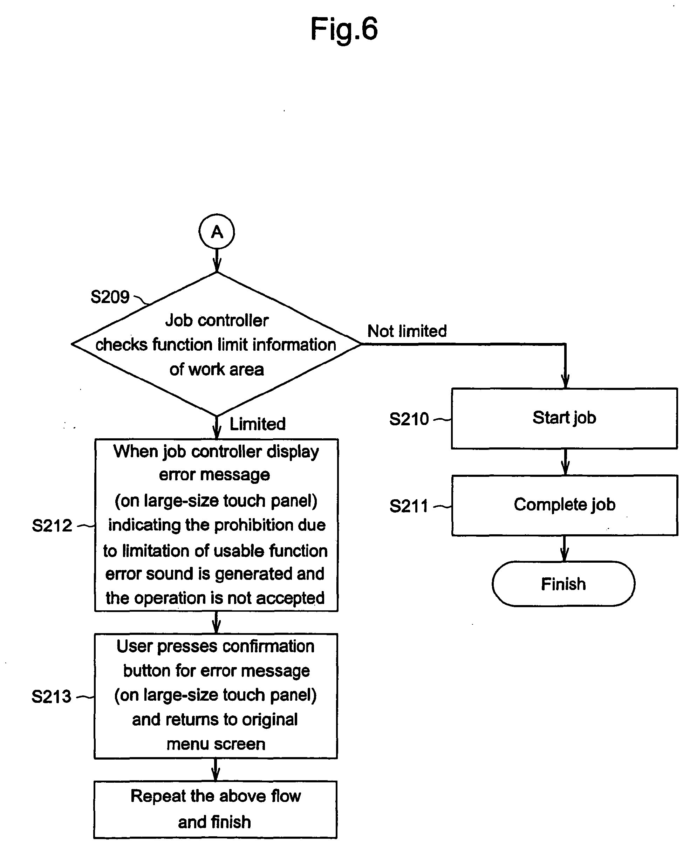

Next, Figs. 5 and 6 are used to illustrate an situation where the user instructs an operation to multifunction apparatus 100 according to the embodiment of the invention.

When a user (operator) having memory card 200 approaches multifunction apparatus 100, RFID controller 117 detects the user (S200). For example, memory card 200 having the personal identification information (user ID) is inserted into a employee badge holder carried by the user (e.g., a holder hanging from the user's neck). When the user carrying memory card 200 approaches the detection area of the RFID controller 117 (in this example, within about 1m range), RFID controller 117 scans the user ID in memory card 200 (S200).

RFID controller 117 stores the user ID scanned from the memory card 200 into work area 121 (S201). Multifunction apparatus general controller 110 retrieves the user ID stored in work area 121 and notifies personal information server I/F 120 via network I/F 119 (S202).

As described later, upon receiving the user ID, the personal information server (as server 102) checks whether a personal information table of the user having the scanned user ID is registered, and transmits data indicating whether such a table is registered.

Personal information server I/F 120 checks whether the user is registered in the personal information server, determining from the transmitted data indicating whether table is registered (S203). When the user's personal information table is not registered ("NO" at S204), personal information server I/F 120 outputs "notification of non-registered user detection" to panel controller 115. Upon receiving the "notification of non-registered user detection", a message stating that the apparatus cannot be used is displayed on large-size touch panel 116 (S205).

When the user's personal information table is registered ("YES" at S204), personal information server I/F 120 retrieves the personal information table data of the detected user from the personal information server, and stores the data in work area 121 (S206).

Panel controller 115 retrieves the detected user name from the personal information table data, the table data being stored in work area 121, and displays the name on large-size touch panel 116 as the person who has been allowed to use the apparatus (S207). For example, when the registered name in the personal information table is "Taro Matsushita", a text such as "Taro Matsushita is authenticated" is displayed.

Along with the detected user name, a menu screen is displayed. The menu screen displays various function buttons from which commands for multifunction apparatus 100 can be input. When the menu screen is displayed on large-size touch panel 116, the user starts the operation (S208). In particular, when the user presses a function button from large-size touch panel 116, an operation (e.g., color copy, fax transmission to an external line, etc.) is started.

When the operation is started, job controller 122 reads the function limit information within the user's personal information table (stored in work area 121) and checks whether the desired function (selected from the function button) is prohibited by the function limit information (S209). When the function is not prohibited by the function limit information, job controller 122 starts the job provided by the selected function (S210). When the job is complete (S211), the process is completed.

When the function is prohibited by the function limit information, job controller 122 outputs an "error notification" to panel controller 115 and voice controller 123, the notification indicating that the function use is prohibited by the function limit information. Upon receiving the "error notification", panel controller 115 displays, on large-size touch panel 116, an error message indicating that the function use is prohibited. Voice controller 123, upon receiving the "error notification", outputs an error sound from speaker 124. At this time, job controller 115 does not accept the function selected by the user (S212).

According to multifunction apparatus 100 of the present embodiment, when a prohibited function is selected by the user, large-size touch panel 116 displays an error message indicating that the function use is prohibited. Therefore, the user can recognize that the function use is prohibited thus take an appropriate measure.

The error message displayed on large-size touch panel 116 includes a confirmation button. The confirmation button can erase the error message and move back the control to S208. When an error message is displayed, the user usually presses the confirmation button to return to the original menu screen (S208) (S213). After repeating the above process, the job instructed by the user is completed (S211). Or, when the user gives up the intended operation, job controller 122 terminates the process.

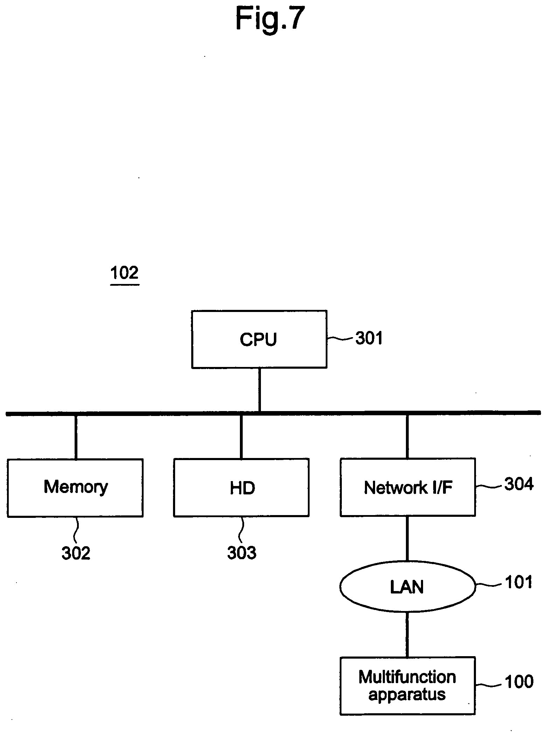

Fig. 7 is a functional block diagram of server 102 connected to multifunction apparatus 100, via LAN 101, according to the embodiment. Server 102 shown in Fig. 7 includes CPU 301 that controls the entire apparatus. Memory 302 stores control programs to be used by CPU 301 for controlling the entire apparatus, and has a function to perform as work memory of CPU 301. Hard disk (HD) 303 stores information to be distributed to multifunction apparatus 100 according to the present embodiment. For example, when server 102 functions as a server for personal information, the personal information table is stored for each registered user. When server 102 functions as a web server, server 102 stores menus for multifunction apparatus 100 and related jobs. Network interface (I/F) 304 interfaces with LAN 101.

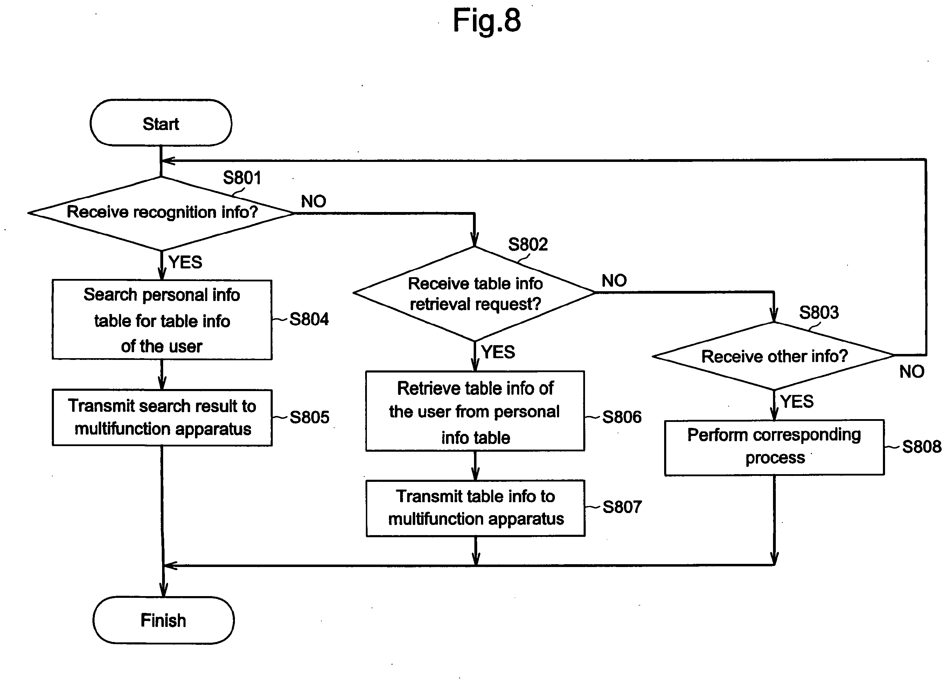

Fig. 8 illustrates an operation when server 102 having the above-described configuration functions as a personal authentication server.

Server 102 as a personal authentication server monitors, in an idle state, a reception of various information from multifunction apparatus 100 according to the present embodiment. In particular, server 102 monitors receptions of identification information (user ID) (ST 801), request to retrieve table information (ST 802), and other information (ST 803).

When identification information is received at ST 801, during the monitoring of receptions of various information, table information of the registered user is searched from the personal information table stored in HD 303 (ST 804). Accordingly, it is determined whether the received identification information is registered in the personal information table. Then, the result of the search (i.e., whether the identification information is registered) is transmitted to the accessing multifunction apparatus 100 (ST 805).

When a request to retrieve table information is received at ST 802, table information of the registered user is retrieved from the personal information table stored in HD 303 (ST 806). Accordingly, the table information of the registered user (associated with the previously received identification information) is retrieved. Then, the table information is transmitted to the accessing multifunction apparatus 100 (ST 807).

When other information is received at ST 803, a process required for the information is performed (ST 808). When various processes are completed at ST 805, ST 807, or ST 808, server 102 terminates the process. Accordingly, server 102 determines and executes the required process according to the information received from multifunction apparatus 100.

According to multifunction apparatus 100 of the present embodiment, function limit information that is preset for an authenticated user is retrieved from server 102 based on the personal identification information (user ID) read from memory card 200. Then, the function limit information is stored in work area 121 and used to limit usable functions for the authenticated user. Therefore, the limitation of usable functions of multifunction apparatus 100 can be easily set for each user. As a result, it is possible to avoid a situation where various functions of multifunction apparatus 100 are used by a user without limitation.

In particular, multifunction apparatus 100 according to the present embodiment stores personal information table in server 102, the table registering personal information. Also, multifunction apparatus 100 retrieves function limit information of a user from server 102, the information corresponding to the personal identification information read from memory card 200. Therefore, multifunction apparatus 100 does not have to register the personal information table within its own apparatus, thereby enabling multifunction apparatus 100 to limit the usable functions without having a large-memory hard disk.

In addition, the present embodiment illustrates a situation where server 102 (functioning as a personal information server) registers information such as personal information and function limit information, so that multifunction apparatus 100 retrieves the information (e.g., personal information) and stores the information in work area 121. However, the present invention is not limited to the above-described embodiment. For example, multifunction apparatus 100 can install a large memory apparatus (e.g., hard disk apparatus) where the personal information is registered and from which the information is retrieved. In this case, apparatus by itself can limit the usable functions of multifunction apparatus 100.

It is noted that the foregoing examples have been provided merely for the purpose of explanation and are in no way to be construed as limiting of the present invention. While the present invention has been described with reference to exemplary embodiments, it is understood that the words which have been used herein are words of description and illustration, rather than words of limitation. Changes may be made, within the purview of the appended claims, as presently stated and as amended, without departing from the scope and spirit of the present invention in its aspects. Although the present invention has been described herein with reference to particular structures, materials and embodiments, the present invention is not intended to be limited to the particulars disclosed herein; rather, the present invention extends to all functionally equivalent structures, methods and uses, such as are within the scope of the appended claims.

The present invention is not limited to the above described embodiments, and various variations and modifications may be possible without departing from the scope of the present invention.

This application is based on the Japanese Patent Application No. 2004-050160 filed on February 25, 2004.

## Claims

1. A multifunction apparatus having a plurality of functions, comprising:
an information retrieval unit (117) adapted to transmit an electromagnetic wave signal to a card (200) carried by a user;
**characterized by:**
said card being a memory card (200) adapted to store identification information of the user; and
said information retrieval unit (117) being adapted to retrieve said identification information of the user from the memory card (200) when the user carrying the memory card (200) is within a detection area;
the apparatus (100) further comprising:
a memory (121) adapted to store limitation information of usable functions of the apparatus (100), wherein said limitation information of usable functions is preset for an authenticated user and includes information on which functions of the apparatus (100) the authenticated user is allowed or is not allowed to use and on limits to the use of the usable functions for the authenticated user; and
a controller (122) adapted to retrieve said limitation information of usable functions from said memory (121) and to control said usable functions of the apparatus (100) based on said limitation information of usable functions, after the user has been authenticated based on the identification information retrieved from the memory card (200).

2. The multifunction apparatus according to claim 1, wherein the limitation information of usable functions includes a function list and information, the list listing functions to be controlled for the use, the information indicating whether the use for each function item is prohibited.

3. The multifunction apparatus according to claim 1, wherein the limitation information of usable functions includes a function list and information, the list listing copier functions to be controlled for the use, the information indicating whether the use for each function item is prohibited.

4. The multifunction apparatus according to claim 1, wherein the limitation information of usable functions includes a function list and information, the list listing facsimile functions to be controlled for the use, the information indicating whether the use for each function item is prohibited.

5. The multifunction apparatus according to claim 1, wherein, when a function prohibited to be used by the limitation information of usable functions is selected by the user, a message is output, the message indicating that the function is prohibited to be used.

6. The multifunction apparatus according to claim 1, wherein a personal information table is stored in a server (102) that is connected via a network (101), the table registering personal information including identification information and limitation information of usable functions of the user, and wherein the limitation information of usable functions of the user corresponding to the identification information retrieved from the memory card (200) is retrieved from the server (102) and stored in said memory (121).

7. The multifunction apparatus according to claim 1, further comprising:
a memory apparatus adapted to store a personal information table, that table registering personal information including identification information and limitation information of usable functions for each user,
wherein the limitation information of usable functions of a user corresponding to the identification information retrieved from the memory card (200) is retrieved from said memory apparatus and stored in said memory (121).

8. A method for controlling usable functions of a multifunction apparatus which has a plurality of functions, the multifunction apparatus (100) having a memory (121), the method comprising the steps of:
presetting limitation information of usable functions for an authenticated user, the user being authenticated based on identification information retrieved from a memory card (200) carried by a user when the user is within a detection area;
transmitting an electromagnetic wave signal to the memory card (200) and retrieving the identification information of the user from the memory card (200);
retrieving said limitation information of usable functions from said memory (121); and
controlling usable functions of the apparatus (100) for the authenticated user according to said limitation information of usable functions retrieved from said memory (121), after the user has been authenticated based on the identification information retrieved from the memory card (200);
wherein said limitation information of usable functions includes information on which functions of the apparatus (100) the authenticated user is allowed or is not allowed to use and on limits to the use of the usable functions for the authenticated user.

9. The method according to claim 8, wherein the limitation information of usable functions includes a function list and information, the list listing functions to be controlled for the use, the information indicating whether the use for each function item is prohibited.

10. The method according to claim 8, wherein the limitation information of usable functions includes a function list and information, the list listing copier functions to be controlled for the use, the information indicating whether the use for each function item is prohibited.

11. The method according to claim 8, wherein the limitation information of usable functions includes a function list and information, the list listing facsimile functions to be controlled for the use, the information indicating whether the use for each function item is prohibited.

12. The method according to claim 8, wherein, when a function prohibited to be used by the limitation information of usable functions is selected by the user, a message is output, the message indicating that the function is prohibited to be used.

13. The method according to claim 8, wherein a personal information table is stored in a server (102) that is connected to the multifunction apparatus (100) via a network (101), the table registering personal information including identification information and limitation information of usable functions of the user, and wherein the limitation information of usable functions of the user corresponding to the identification information retrieved from the memory card (200) is retrieved from the server (102) and stored in the memory (121).

14. The method according to claim 8, further comprising the step of:
presetting a personal information table to a memory apparatus, the personal information table registering personal information including identification information and limitation information of usable functions for each user,
wherein the limitation information of usable functions of a user corresponding to the identification information retrieved from the memory card (200) is retrieved from the memory apparatus and stored in the memory (121).

## Patentansprüche

1. Multifunktionsvorrichtung mit einer Vielzahl von Funktionen, die umfasst:
eine Einheit (117) zum Abruf von Informationen, die so eingerichtet ist, dass sie ein elektromagnetisches Wellen-Signal zu einer von einem Benutzer mitgeführten Karte (200) sendet;
**dadurch gekennzeichnet, dass:**
die Karte eine Speicherkarte (200) ist, die zum Speichern von Identifikations-Informationen des Benutzers eingerichtet ist; und
die Einheit (117) zum Abruf von Informationen so eingerichtet ist, dass sie die Identifikations-Informationen des Benutzers von der Speicherkarte (200) abruft, wenn sich der die Speicherkarte (200) mitführende Benutzer innerhalb eines Erfassungs-Bereiches befindet;
wobei die Vorrichtung (100) des Weiteren umfasst:
einen Speicher (121), der so eingerichtet ist, dass er Einschränkungs-Informationen zu nutzbaren Funktionen der Vorrichtung (100) speichert, wobei die Einschränkungs-Informationen zu nutzbaren Funktionen für einen authentifizierten Benutzer vorgegeben sind und Informationen darüber, welche Funktionen der Vorrichtung (100) der authentifizierte Benutzer nutzen darf oder nicht nutzen darf, und über Einschränkungen hinsichtlich der Nutzung der nutzbaren Funktionen für den authentifizierten Benutzer einschließen; sowie
eine Steuerungseinrichtung (122), die so eingerichtet ist, dass sie die Einschränkungs-Informationen zu nutzbaren Funktionen aus dem Speicher (121) abruft und die nutzbaren Informationen der Vorrichtung (100) auf Basis der Einschränkungs-Informationen zu nutzbaren Funktionen steuert, nachdem der Benutzer auf Basis der von der Speicherkarte (200) abgerufenen Identifikations-Informationen authentifiziert worden ist.

2. Multifunktionsvorrichtung nach Anspruch 1, wobei die Einschränkungs-Informationen zu nutzbaren Funktionen eine Funktions-Liste sowie Informationen einschließen, die Liste für die Nutzung zu steuernde Funktionen auflistet und die Informationen anzeigen, ob die Nutzung für jedes Funktions-Element nicht gestattet ist.

3. Multifunktionsvorrichtung nach Anspruch 1, wobei die Einschränkungs-Informationen zu nutzbaren Funktionen eine Funktions-Liste sowie Informationen einschließen, die Liste für die Nutzung zu steuernde Kopierer-Funktionen auflistet und die Informationen anzeigen, ob die Nutzung für jedes Funktions-Element nicht gestattet ist.

4. Multifunktionsvorrichtung nach Anspruch 1, wobei die Einschränkungs-Informationen zu nutzbaren Funktionen eine Funktions-Liste sowie Informationen einschließen, die Liste für die Nutzung zu steuernde Fax-Funktionen auflistet und die Informationen anzeigen, ob die Nutzung für jedes Funktions-Element nicht gestattet ist.

5. Multifunktionsvorrichtung nach Anspruch 1, wobei, wenn von dem Benutzer eine Funktion ausgewählt wird, deren Nutzung durch die Einschränkungs-Informationen zu nutzbaren Funktionen nicht gestattet ist, eine Benachrichtigung ausgegeben wird und die Benachrichtigung anzeigt, dass Nutzung der Funktion nicht gestattet ist.

6. Multifunktionsvorrichtung nach Anspruch 1, wobei eine Tabelle mit persönlichen Informationen in einem Server (102) gespeichert ist, der über ein Netzwerk (101) verbunden ist, in der Tabelle persönliche Informationen registriert sind, die Identifikations-Informationen sowie Einschränkungs-Informationen zu nutzbaren Funktionen des Benutzers einschließen, und die Einschränkungs-Informationen zu nutzbaren Funktionen des Benutzers, die den von der Speicherkarte (200) abgerufenen Identifikations-Informationen entsprechen, von dem Server (102) abgerufen und in dem Speicher (121) gespeichert werden.

7. Multifunktionsvorrichtung nach Anspruch 1, die des Weiteren umfasst:
eine Speichervorrichtung, die so eingerichtet ist, dass sie eine Tabelle mit persönlichen Informationen speichert, wobei in dieser Tabelle persönliche Informationen registriert sind, die Identifikations-Informationen sowie Einschränkungs-Informationen zu nutzbaren Funktionen für jeden Benutzer einschließen,
und die Einschränkungs-Informationen zu nutzbaren Funktionen eines Benutzers, die den von der Speicherkarte (200) abgerufenen Identifikations-Informationen entsprechen, aus der Speichervorrichtung abgerufen und in dem Speicher (121) gespeichert werden.

8. Verfahren zum Steuern nutzbarer Funktionen einer Multifunktionsvorrichtung mit einer Vielzahl von Funktionen, wobei die Multifunktionsvorrichtung (100) einen Speicher (121) aufweist und das Verfahren die folgenden Schritte umfasst:
Vorgeben von Einschränkungs-Informationen zu nutzbaren Funktionen für einen authentifizierten Benutzer, wobei der Benutzer auf Basis von Identifikations-Informationen authentifiziert wird, die von einer von einem Benutzer mitgeführten Speicherkarte (200) abgerufen werden, wenn sich der Benutzer innerhalb eines Erfassungs-Bereiches befindet;
Senden eines elektromagnetischen Wellen-Signals zu der Speicherkarte (200) und Abrufen der Identifikations-Informationen des Benutzers von der Speicherkarte (200);
Abrufen der Einschränkungs-Informationen zu nutzbaren Funktionen aus dem Speicher (121); und
Steuern nutzbarer Informationen der Vorrichtung (100) für den authentifizierten Benutzer entsprechend den aus dem Speicher (121) abgerufenen Einschränkungs-Informationen zu nutzbaren Funktionen, nachdem der Benutzer auf Basis der von der Speicherkarte (200) abgerufenen Identifikations-Informationen authentifiziert worden ist;
wobei die Einstellungs-Informationen zu nutzbaren Funktionen Informationen darüber, welche Funktionen der Vorrichtung (100) der authentifizierte Benutzer nutzen darf oder nicht nutzen darf, sowie über Einschränkungen hinsichtlich der Nutzung der nutzbaren Funktionen für den authentifizierten Benutzer einschließen.

9. Verfahren nach Anspruch 8, wobei die Einschränkungs-Informationen zu nutzbaren Funktionen eine Funktions-Liste sowie Informationen einschließen, die Liste für die Nutzung zu steuernde Funktionen auflistet und die Informationen anzeigen, ob die Nutzung für jedes Funktions-Element nicht gestattet ist.

10. Verfahren nach Anspruch 8, wobei die Einschränkungs-Informationen zu nutzbaren Funktionen eine Funktions-Liste sowie Informationen einschließen, die Liste für die Nutzung zu steuernde Kopierer-Funktionen auflistet und die Informationen anzeigen, ob die Nutzung für jedes Funktions-Element nicht gestattet ist.

11. Verfahren nach Anspruch 8, wobei die Einschränkungs-Informationen zu nutzbaren Funktionen eine Funktions-Liste sowie Informationen einschließen, die Liste für die Nutzung zu steuernde Fax-Funktionen auflistet und die Informationen anzeigen, ob die Nutzung für jedes Funktions-Element nicht gestattet ist.

12. Verfahren nach Anspruch 8, wobei, wenn von dem Benutzer eine Funktion ausgewählt wird, deren Nutzung durch die Einschränkungs-Informationen zu nutzbaren Funktionen nicht gestattet ist, eine Benachrichtigung ausgegeben wird und die Benachrichtigung anzeigt, dass Nutzung der Funktion nicht gestattet ist.

13. Verfahren nach Anspruch 8, wobei eine Tabelle mit persönlichen Informationen in einem Server (102) gespeichert ist, der über ein Netzwerk (101) verbunden ist, in der Tabelle persönliche Informationen registriert sind, die Identifikations-Informationen sowie Einschränkungs-Informationen zu nutzbaren Funktionen des Benutzers einschließen, und die Einschränkungs-Informationen zu nutzbaren Funktionen des Benutzers, die den von der Speicherkarte (200) abgerufenen Identifikations-Informationen entsprechen, von dem Server (102) abgerufen und in dem Speicher (121) gespeichert werden.

14. Verfahren nach Anspruch 8, das des Weiteren den folgenden Schritt umfasst:
Vorgeben einer Tabelle mit persönlichen Informationen in einer Speichervorrichtung, wobei in dieser Tabelle persönliche Informationen registriert werden, die Identifikations-Informationen sowie Einschränkungs-Informationen zu nutzbaren Funktionen für jeden Benutzer einschließen,
und die Einschränkungs-Informationen zu nutzbaren Funktionen eines Benutzers, die den von der Speicherkarte (200) abgerufenen Identifikations-Informationen entsprechen, aus der Speichervorrichtung abgerufen und in dem Speicher (121) gespeichert werden.

## Revendications

1. Appareil multifonction ayant une pluralité de fonctions, comprenant :
une unité de récupération d'informations (117) adaptée pour transmettre un signal d'onde électromagnétique à une carte (200) portée par un utilisateur ;
**caractérisé par** :
ladite carte étant une carte mémoire (200) adaptée pour stocker des informations d'identification de l'utilisateur ; et
ladite unité de récupération d'informations (117) étant adaptée pour récupérer lesdites informations d'identification de l'utilisateur à partir de la carte mémoire (200) lorsque l'utilisateur portant la carte mémoire (200) se trouve dans une zone de détection ;
l'appareil (100) comprenant en outre :
une mémoire (121) adaptée pour stocker des informations de limitation de fonctions utilisables de l'appareil (100), lesdites informations de limitation de fonctions utilisables étant préétablies pour un utilisateur authentifié et comprenant des informations concernant des fonctions de l'appareil (100) que l'utilisateur authentifié est autorisé ou n'est pas autorisé à utiliser et des limites d'utilisation des fonctions utilisables pour l'utilisateur authentifié ; et
un dispositif de commande (122) adapté pour récupérer lesdites informations de limitation de fonctions utilisables à partir de ladite mémoire (121) et pour commander lesdites fonctions utilisables de l'appareil (100) sur la base desdites informations de limitation de fonctions utilisables, après que l'utilisateur a été authentifié sur la base des informations d'identification récupérées à partir de la carte mémoire (200).

2. Appareil multifonction selon la revendication 1, dans lequel les informations de limitation de fonctions utilisables comprennent une liste de fonctions et des informations, la liste listant des fonctions à commander quant à l'utilisation, les informations indiquant si l'utilisation pour chaque élément de fonction est interdite.

3. Appareil multifonction selon la revendication 1, dans lequel les informations de limitation de fonctions utilisables comprennent une liste de fonctions et des informations, la liste listant des fonctions de copieur à commander quant à l'utilisation, les informations indiquant si l'utilisation pour chaque élément de fonction est interdite.

4. Appareil multifonction selon la revendication 1, dans lequel les informations de limitation de fonctions utilisables comprennent une liste de fonctions et des informations, la liste listant de fonctions de télécopieur à commander quant à l'utilisation, les informations indiquant si l'utilisation pour chaque élément de fonction est interdite.

5. Appareil multifonction selon la revendication 1, dans lequel, lorsqu'une fonction interdite d'utilisation par les informations de limitation de fonctions utilisables est sélectionnée par l'utilisateur, un message est délivré en sortie, le message indiquant que la fonction est interdite d'utilisation.

6. Appareil multifonction selon la revendication 1, dans lequel une table d'informations personnelles est stockée dans un serveur (102) qui est connecté via un réseau (101), la table enregistrant des informations personnelles comprenant des informations d'identification et des informations de limitation de fonctions utilisables de l'utilisateur, et dans lequel les informations de limitation de fonctions utilisables de l'utilisateur correspondant aux informations d'identification récupérées à partir de la carte mémoire (200) sont récupérées à partir du serveur (102) et stockées dans ladite mémoire (121).

7. Appareil multifonction selon la revendication 1, comprenant en outre :
un appareil de mémoire adapté pour stocker une table d'informations personnelles, laquelle table enregistrant des informations personnelles comprenant des informations d'identification et des informations de limitation de fonctions utilisables pour chaque utilisateur,
dans lequel les informations de limitation de fonctions utilisables d'un utilisateur correspondant aux informations d'identification récupérées à partir de la carte mémoire (200) sont récupérées à partir dudit appareil de mémoire et stockées dans ladite mémoire (121).

8. Procédé pour commander des fonctions utilisables d'un appareil multifonction qui a une pluralité de fonctions, l'appareil multifonction (100) ayant une mémoire (121), le procédé comprenant les étapes consistant à :
préétablir des informations de limitation de fonctions utilisables pour un utilisateur authentifié, l'utilisateur étant authentifié sur la base d'informations d'identification récupérées à partir d'une carte mémoire (200) portée par un utilisateur lorsque l'utilisateur se trouve dans une zone de détection ;
transmettre un signal d'onde électromagnétique à la carte mémoire (200) et récupérer les informations d'identification de l'utilisateur à partir de la carte mémoire (200) ;
récupérer lesdites informations de limitation de fonctions utilisables à partir de ladite mémoire (121) ; et
commander des fonctions utilisables de l'appareil (100) pour l'utilisateur authentifié en fonction desdites informations de limitation de fonctions utilisables récupérées à partir de ladite mémoire (121), après que l'utilisateur a été authentifié sur la base des informations d'identification récupérées à partir de la carte mémoire (200) ;
dans lequel lesdites informations de limitation de fonctions utilisables comprennent des informations sur des fonctions de l'appareil (100) que l'utilisateur authentifié est autorisé ou n'est pas autorisé à utiliser et sur des limites de l'utilisation des fonctions utilisables pour l'utilisateur authentifié.

9. Procédé selon la revendication 8, dans lequel les informations de limitation de fonctions utilisables comprennent une liste de fonctions et des informations, la liste listant des fonctions à commander quant à l'utilisation, les informations indiquant si l'utilisation pour chaque élément de fonction est interdite.

10. Procédé selon la revendication 8, dans lequel les informations de limitation de fonctions utilisables comprennent une liste de fonctions et des informations, la liste listant des fonctions de copieur à commander quant à l'utilisation, les informations indiquant si l'utilisation pour chaque élément de fonction est interdite.

11. Procédé selon la revendication 8, dans lequel les informations de limitation de fonctions utilisables comprennent une liste de fonctions et des informations, la liste listant des fonctions de télécopieur à commander quant à l'utilisation, les informations indiquant si l'utilisation pour chaque élément de fonction est interdite.

12. Procédé selon la revendication 8, dans lequel, lorsqu'une fonction interdite d'utilisation par les informations de limitation de fonctions utilisables est sélectionnée par l'utilisateur, un message est délivré en sortie, le message indiquant que la fonction est interdite d'utilisation.

13. Procédé selon la revendication 8, dans lequel une table d'informations personnelles est stockée dans un serveur (102) qui est connecté à l'appareil multifonction (100) via un réseau (101), la table enregistrant des informations personnelles comprenant des informations d'identification et des informations de limitation de fonctions utilisables de l'utilisateur, et dans lequel les informations de limitation de fonctions utilisables de l'utilisateur correspondant aux informations d'identification récupérées à partir de la carte mémoire (200) sont récupérées à partir du serveur (102) et stockées dans ladite mémoire (121).

14. Procédé selon la revendication 8, comprenant en outre l'étape consistant à :
préétablir une table d'informations personnelles dans un appareil de mémoire, la table d'informations personnelles enregistrant des informations personnelles comprenant des informations d'identification et des informations de limitation de fonctions utilisables pour chaque utilisateur,
dans lequel les informations de limitation de fonctions utilisables d'un utilisateur correspondant aux informations d'identification récupérées à partir de la carte mémoire (200) sont récupérées à partir de l'appareil de mémoire et stockées dans la mémoire (121).
